# NEW EUROPEAN PATENT SPECIFICATION

(11) **EP 2 210 500 B2**
(45) Date of publication and mention of the opposition decision: **04.03.2020**
(45) Mention of the grant of the patent: 18.12.2013
(21) Application number: 10075151.0
(22) Date of filing: 01.04.2010
(51) Int. Cl.: A23G 1/18, A23G 1/00

(54) **Method and apparatus for continuous tempering of chocolate mass**
Verfahren und Vorrichtung zur kontinuerlichen Temperierung von Schokoladenmasse
Procédé et dispositif pour le conditionnement thermique continu de masses de chocolat

(43) Date of publication of application: 28.07.2010
(60) Divisional application: 12075091.4
(73) Proprietor: Aasted ApS, 3520 Farum (DK)
(72) Inventor: Holmud, Dennis, 2860 Søborg (DK); Haslund, Henning, 4632 Bjæverskov (DK)
(74) Representative: Heiden, Finn

(56) References cited:
- EP-A1- 0 872 187
- EP-A1- 0 872 187
- EP-A1- 0 893 066
- EP-A1- 0 893 066
- EP-A1- 0 947 140
- EP-A1- 0 947 140
- EP-A1- 1 180 941
- EP-A1- 1 425 975
- EP-A1- 1 425 975
- EP-A1- 1 566 104
- EP-A1- 1 566 104
- EP-A1- 1 616 487
- EP-A1- 1 616 487
- EP-A2- 1 050 214
- EP-A2- 1 050 214
- EP-A2- 1 249 174
- EP-A2- 1 249 174
- WO-A1-01/06863
- WO-A1-01/06863
- WO-A1-92/00015
- WO-A1-92/00015
- DE-A1- 1 432 071
- DE-A1- 2 602 877
- DE-A1- 2 602 877
- DE-A1- 10 329 177
- DE-A1- 10 329 177
- DE-B- 1 073 287
- DE-B- 1 273 312
- DE-C- 848 147
- FR-A- 1 163 921
- FR-A- 1 163 921
- GB-A- 826 502

## Description

The present invention concerns a method for continuous tempering of fat-containing, crystallisable chocolate mass, which has been heated, so that it is liquid, pumpable and essentially free from crystals.

Generally, the chocolate mass, that is continuously tempered by the method according to the invention encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

However, for the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

Optimal is then, when the type of crystals are stable βV-crystals only. The content thereof in the ready tempered chocolate mass shall be at a desired content- for example of 1,0 % for a specific production. Only then the manufacturer can rely on that the quality of his chocolate products are always the same.

Before the chocolate mass is supplied to perform the actual tempering process by running continuously through the tempering apparatus, the mass is heated to around 40-50°C in a premature step. Then essentially all the crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that crystals are very close to be created. Thereafter the mass passes through the crystallisation stage in which the temperature of the mass is typically lowered to 26-30°C. The mass and the heat-exchanging surfaces of the crystallisation stage is so cold, that crystals are created in the mass. The cooling water temperature is generally set to 10-14°C by the tempering apparatus at the market today. The approximate temperature of the heat-exchanging surfaces of the crystallisation stage is advised to be below 18°C, so that crystal creation ("impfning") is performed at the cooling surfaces and not in the mass. Thereafter, the mass is conditioned and the crystals are mixed out through the mass. By conditioning means that creation and development of new crystals in the mass proceed. The temperature is also raised 0,5-2,0°C in the conditioning and mixing stage. The purpose is to melt out as many as possible of the in-stable crystals, which unavoidably are created at the cold surfaces of the crystallisation stage. Desirable is to preserve a content of stable βV-crystals only, by trying to melt up the in-stable crystals, which melt at lower temperatures than the stable βV-crystals. The stable βV-crystals are preserved in the mass in an amount of typically 0,01% - 5%, preferably in an amount of 0,1% - 2%.

Apparatuses for performing the above continuous tempering methods have dominated the market for many years. Though the cold surfaces of the cooling and crystallisation stages have made the machines smaller in their physical size, they are however still large and expensive, especially when bigger amounts of mass shall be continuously tempered, i.e. more than 500kg/hour. The principle with the cold surfaces of the crystallisation stage also creates a huge amount of in-stable crystals, which very often makes it difficult to achieve the desirable, highest possible quality of the moulded product, especially in terms of shelf-life. This is because it is time consuming and energy consuming to remove in-stable crystals entirely during the final conditioning or reheating stage. The tempering columns of the apparatus would simply be to big and expensive if the conditioning stages should have sufficient capacity to achieve total re-melting of in-stable crystals. When mass with high fat content is tempered, then the amount of in-stable crystals created is also high. Then, the problem is even more exaggerated when chocolate with high fat content such as milk chocolate, white chocolate, nougat or filling mass for pralines are tempered.

A given size of a tempering machine at the market has a fixed length and consequently fixed areas for cooling, crystallisation and reheating.

Due to the above described problematic of continuous tempering of masses with a high fat content, it is well-known today, that the maximum capacity measured in kilograms per hour of tempered mass of a given tempering machine of the ones at the market is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered.

When high fat recipes having fat content between 40% and 100% are tempered, the maximum capacity is lowered up to 50%.

A major disadvantage is then a very high energy consumption, firstly for cooling down the total mass and secondly for reheating the mass. Also the energy requirements are high for the chocolate pumps and the gear motors of the tempering machines.

EP 1616487 A1 (Sollich) discloses a tempering apparatus by which already tempered mass is re-circulated to the mixing or conditioning stage or to the crystallisation stage for upgrading the concentration of crystals in the mass. However the crystal content may be difficult to control exactly to a desired level.

EP 1180941 A1 discloses a method and an apparatus by which a seed suspension having a content of beta VI crystals is prepared by use of a high shear crystalliser, with or without the addition of crystal powder. The seed suspension is subsequently mixed in a content of 0,01% - 0,2% with a main stream of a crystal free mass such as for example a filling mass with a content of oils derived from nuts.

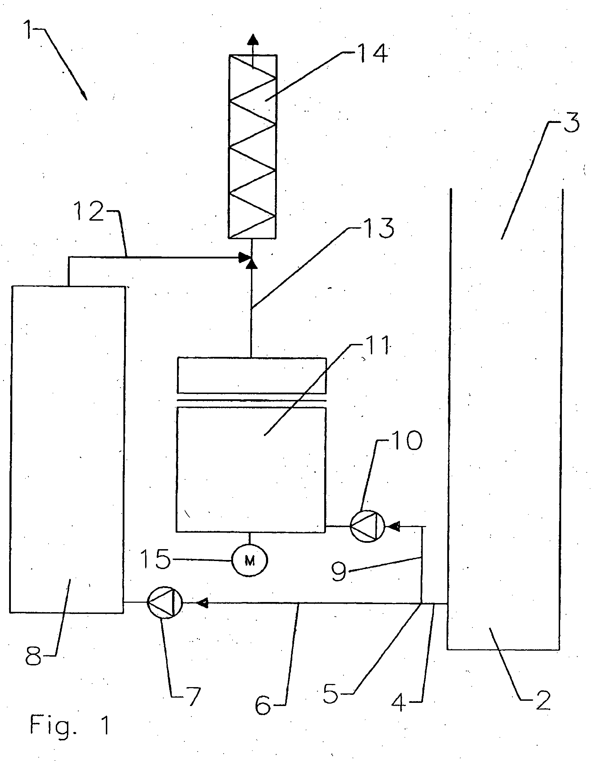

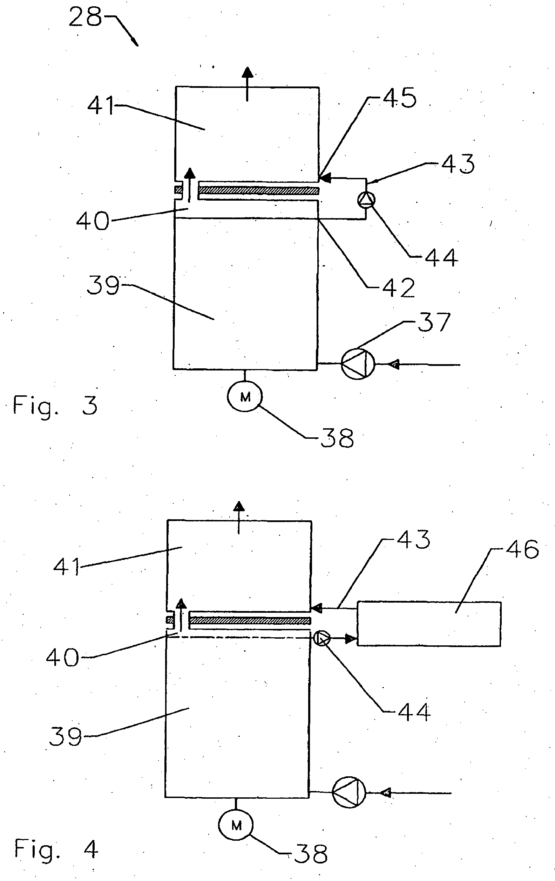

EP 1249174 A2 (Sollich) discloses a method and apparatus by which an additional substance in the form of already crystallized powder (Impfkristalle) is added to part of the mass. In figures 1 and 4 the crystallized mass is furthermore re-circulated to be mixed with the added crystallized powder. The addition of expensive seed materials can not be avoided.

DE 10329177 A1(Dohmann) discloses that a separate stream of mass is lead via one or more passages through the fixed water chambers 14 inside a tempering apparatus for enhancing mixing of mass particles in particular areas with the rest of the mass being tempered. Both the by-passed mass streams and the major mass is subjected to the same temperature conditions at the particular water chamber, being either heated or crystallised by cooling.

FR 1163921 and DE 2602877 disclose configurations of apparatus and methods for batch production by which a stream of mass is extracted from a batch of mass with crystals and is being re-circulated to the same batch of mass again.

WO 01/06863 A1 disclose a method by which a seed material is mixed with liquid chocolate mass and by which the seed material is extracted from mixed mass that has been cooled. Thereby, a stream of crystallized mass is being re-circulated and mixed for upgrading mass with crystals. The degree of crystallisation can be impossible to control when re-circulating already crystallised mass.

The challenge of this prior method and apparatus seems to be, that the mixing has to be very intensive and thoroughly for the resultant mass to be sufficiently homogenous. Also the method is very time consuming as it takes at least 11/2-2 hours for the seed suspension to be created and the equipment is expensive. Furthermore, is the added seed powder very expensive as it is based on cocoa butter-fat.

The method of the present invention is defined in claim 1.

According to the method of the present invention, the mass is divided into a first stream of mass and a second stream of mass. The mass is cooled, so that crystals are created in the first stream of mass, and so that the second stream of mass is still being free from crystals. Thereafter, the first stream of mass and the second stream of mass are mixed together into one final crystallised stream of mass.

The temperature of the second stream of mass is kept 4-7°C higher than the lowest achievable temperature of the first stream of mass, when it is being crystallised. Thereby, the second stream of mass is cooled to the lowest possible temperature without creating crystals. Consequently is avoided any cooling amount for creating crystals in the second stream of mass. The total amount of cooling energy required for tempering of the mass is then lower than by the prior tempering process.

The first stream of mass is effectively cooled and crystallised. During the subsequent mixing of the first and the second stream of mass, the crystals are effectively and homogenously spread out in the final stream of mass.

The second stream of mass is kept at a constant temperature immediately before mixing. The temperature must be low enough for the crystals in the first stream not to be re-melted and high enough for undesirable crystallisation not to be performed before and during mixing. The temperature is typically between 29 and 35°C, primarily 30-33°C, however is dependent of the particular mass.

Hereby is provided a method which is especially energy saving. The total energy requirements for providing continuously tempered chocolate mass is lowered up to 70% for common chocolate recipes such as dark chocolate, milk chocolate and nougat.

Important to notice is, that the method according to the present invention avoids use of any additional substance, such as expensive seed materials of cocoa butter. Neither is already crystallised mass re-circulated for upgrading of the mass or achieving higher concentration of crystals in the mass.

A further advantage is, that instable crystals can only be created in the first stream of mass being crystallised. Then, a smaller amount of instable crystals are potentially created, than by the prior art. Consequently, lesser energy is required for re-melting the remaining instable crystals in the mass as compared with the prior art.

But also the quality of the final mass is potentially better as the amount of in-stable crystals are potentially smaller.

The complete mass may be cooled before it is divided. Then it is not necessary to cool down the biggest second stream of mass further before the mixing of it with the first stream of mass. Decisive is however, that the temperature of the second stream of mass is so low, that the stable beta crystals created are not melted up again during the mixing. The second stream of mass may also be cooled separately, so that the cooling thereof is independent of the first stream of mass.

When the amount of the first stream of mass is between 5% and 40% of the amount of the final stream of mass, then is obtained the lowest possible energy consumption for performing the continuous tempering according to the invention. The small amount of crystallised mass, i.e. between 5% and 40% is effectively spread out in the second stream of mass during the mixing therewith. Surprisingly, the crystals in a short time such as 10-20 seconds give rise to accelerated crystallisation in the remaining un-crystallised mass. Thereby, is achieved a synergy effect. On basis of the very low energy requirement for cooling and crystallising the small amount of crystals in the first stream of mass, is obtained a "initiating" effect for the remaining part of the mass without the addition of further cooling energy.

When the mass to be continuously tempered is milk chocolate, compound chocolate, nougat or other chocolate with a fat content between 30% and 40 % the energy savings are especially great. When tempering milk chocolate the savings are as high as up to 70% in comparison with a traditional tempering apparatus.

The new method makes it possible to crystallise only a smaller part of the total mass. The necessary cooling energy is then lowered as well as the energy requirements for electric gear motor and chocolate pumps. The cooling surfaces of the tempering apparatus is lesser than of that by the prior art methods for producing the same total amount of crystallised mass. The total energy requirements for the complete apparatus is then also lowered in comparison with the prior art machines for producing the same amount of tempered mass. The apparatus can then be produced smaller in size. A very high desirable quality with diminishing content of instable crystals is achievable without using any "seed" technique by which expensive cocoa butter has to be crystallised separately and added to the particular mass.

It is especially advantageous when the apparatus is adapted to divide between 5% to 40% of the total mass into the first stream of mass and the rest into the second stream of mass. Then, the appropriate size of cooling surfaces and cooling capacity in the crystallisation stage is much lesser than when 100% of mass has to be crystal-lised. The apparatus may then be made especially small and the energy consump-tion is lowered severely for the apparatus, i.e. up to 70%.

Tests has shown, that when the amount of the first stream of mass is between 10% and 30% of the amount of the final stream of mass, the highest possible capacity of mass is achieved for a fixed configuration of an apparatus. The energy savings are also among the greatest. The totally consumed energy for apparatus is measured to between 7,7 W/Kg/hour and 9,2 W/Kg/hour tempered dark chocolate mass or milk chocolate mass . In comparison herewith the totally consumed energy for prior art methods was measured to 20-25 W/Kg/hour at the same conditions. The maximum tempered amount was between 1400 kg and 1800 kg per hour.

A great advantage is also, that all the equipment of the apparatus is well-known components. For example may the tempering unit, the tanks, and the mixers be of known types commercially available at the market.

The invention is further described by referring to the drawing, in which
- figure 1: schematically discloses an apparatus configuration for carrying out a method not according to the invention,
- figure 2: schematically discloses a configuration for carrying out the method of the invention,
- figure 3: schematically discloses an apparatus for carrying out the method of the invention,
- figure 4: another embodiment of figure 3,
- figure 5: discloses schematically in vertical section one embodiment of the inner chambers of the apparatus of figure 3 or 4, and
- figure 6: discloses schematically another embodiment of the inner chambers according to figure5.

The apparatus 1 of figure 1 comprises a holding tank 2 for the chocolate mass 3 to be continuously tempered. A tube 4 connects the tank 2 with a branch 5. A tube 6 connects the branch 5 with a pump 7 connected to a heat exchanger or cooler 8. A further tube 9 connects the branch 5 with a further pump 10, which is connected to a cooling or tempering device 11. The cooler 8 is connected via a tube 12 with a static mixer 14. The tempering device 11 is connected with the static mixer 14 via a tube 13. The tempering device could be of any usual known type available on the commercial market as long as it is capable of creating crystals in the first stream of the mass. The tempering device is usually equipped with internal stirring tools mounted on a longitudinal shaft driven by a motor 15.

The chocolate mass in the tank 2 is heated to a temperature interval of 40-50°C. A first stream of mass is pumped via the pump 10 continuously through the tempering column 11 and via the tube 13 to the static mixer 14. A second stream of mass is pumped via the pump 7 through the cooler 8 and further via the tube 12 to the static mixer 14.

The amount of the first stream of mass is smaller than the amount of the second stream of mass. In the cooler 8 the second stream of mass is cooled from 40-50°C to between 29-35°C depending on the particular mass in question. Important is, that the mass of the second stream achieves a temperature, so that it is still free from crystals immediately before mixing with the first stream of mass. Then, crystals created in the first stream of mass must be able to survive when the two streams are mixed in the mixer 14. This means, that the temperature of the second stream of mass is typically 29-32°C for milk chocolate, white chocolate and nougat chocolate and 31-33°C for dark chocolate when the mass enters the mixer 14.

The first stream of mass is tempered continuously in the tempering apparatus 11 after well-known procedures. In the mixer 14 the smaller first stream of mass is mixed up into the larger second stream of mass and the crystals are mixed thoroughly and homogenously out into the final mass continuously delivered from the mixer 14.

At one example the liquid mass in the tank 2 is dark chocolate with a fat content of 26%. At one production run 10% of the amount of mass is pumped by the pump 10 through the tempering apparatus 11 and 90% of the dark chocolate is pumped through the cooler 8. Approximately 35% of the total energy requirement is saved in comparison with the energy required by a traditional tempering machine. Approximately 1000 kg/hour of well-tempered dark chocolate was delivered continuously by the mixer.

At another production run milk chocolate with a fat content of 36% is in the tank 2. Then, 25% of the amount of milk chocolate is pumped by the pump 10 through the tempering apparatus 11 and 75% of the milk chocolate is pumped through cooler 8. Astonishingly is approximately 55% of the total energy requirement saved in comparison with the energy required by a traditional tempering machine. Approximately 1400 kg/hour of well-tempered milk chocolate was delivered continuously by the mixer.

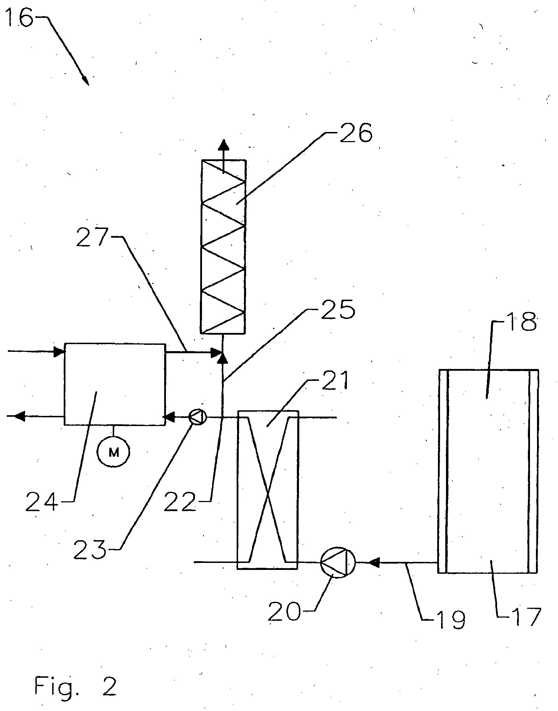

The apparatus 16 of figure 2 according to the invention is also configured for carrying out the method of the invention. A tank 17 keeps the mass 18 at a constant temperature between 40°C and 50°C. A tube 19 connects the tank 17 with a pump 20. A cooler or heat exchanger 21 is connected with the pump 20 at the inlet and with a branch 22 at the outlet. The branch 22 is connected with a pump 23 for delivering the first stream of mass to a tempering apparatus or cooler 24, and is further connected with a tube 25 for delivering the second stream directly to a static mixer 26. A tube 27 connects the tempering machine 24 with the mixer 26 for delivering tempered mass to the mixer.

The total mass is cooled in the cooler close to a temperature where crystals can be created, however the mass is still crystal-free. Via the pump 23 the first stream of mass is pumped into the tempering column 24 in an amount of typically between 10% and 40%. The first stream is tempered in the apparatus 24, so that a content of between 0,5% and 3% of crystals is created. The normal tempering settings and procedures are followed as if the tempering machine was standing alone as by the prior art. Thereby, desirable tempering curves are obtained. In the mixer the two streams of mass are mixed thoroughly together into a finally crystallized mass. The energy savings are as by the previously described embodiment, typically a few percent better.

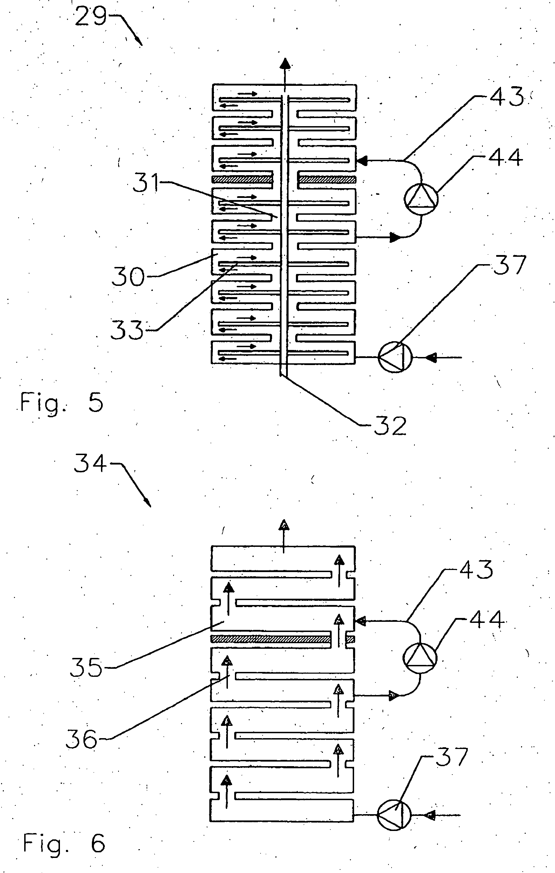

In figure 3 is disclosed a tempering apparatus for carrying out the inventive method. The apparatus 28 constitutes of a tempering column of well-known type such as the one disclosed in figure 5 or in figure 6.

The tempering column 29 schematically disclosed in figure 5 is build up by discs chambers 30 for the chocolate and intermediary chambers for the water, which are not disclosed as they are not part of the inventive idea. All the chocolate chambers 30 are interconnected by central ring-shaped openings 31. A central shaft 32 is connected with stirring tools 33 arranged in each chocolate chamber 30.

The tempering column 34 schematically disclosed in figure 6 is build up by discs chambers 35 for the chocolate and intermediary chambers for the water. All the chocolate chambers 35 are interconnected by openings 36 arranged at the periphery. A central shaft is connected with stirring tools arranged in each chamber as in figure 5.

Via a pump 37 the chocolate mass is pumped continuously through the column 28 in figure 3 and as disclosed more detailed in figure 5 or in figure 6. A motor 38 turns the shaft 32 and the stirring tools 33 typically with 25-50 revolutions per minute.

The tempering apparatus 28 in figure 3 has a cooling section 39, a crystallisation section 40 and a mixing and conditioning section 41. Between the cooling section 39 and the crystallisation section 40 is arranged the inlet 42 to a conduit 43 with a pump 44. The outlet 45 of the conduit is connected with the mixing section 41.

The mass is pumped from the non-disclosed tank having a temperature of 40-50°C by the pump 37 into the cooling section 39 of the tempering column 28. In the cooling section 39 the temperature of the mass is lowered so much that it is close to the temperature at which crystals can be created, however it is still free from any crystals in the mass. The pump 44 pumps the desired amount of the second stream of mass out of the tempering column and into the conduit 43. From the by-passing conduit the second stream of mass enters via the inlet 45 into the mixing section 41, still being free from crystals. The first stream of mass flow through the crystallisation section 40 at which crystals are created in the mass. From there the first stream of mass flow into the mixing section 41 and mixes up with the second stream of mass, so that the crystals are homogenously distributed out through the final mass.

At one production test with dark chocolate a continuous amount of 1000 kg/hour is delivered from the apparatus 28. Approximately 90% of the dark chocolate is by-passed in the conduit 43, meaning that this amount of chocolate is not being crystallised in the crystallisation section 40. Well-tempered dark chocolate is delivered continuously from the apparatus. The tempering index is flat and sharp in the region of 4,7-5,3, which is extremely well in comparison with the results achievable for the prior known apparatus. The total energy consumption for the apparatus is measured, both in terms of cooling energy from cold water as well as the consumption of all electrical components and pumps. The result is that 40% of the total energy consumption is saved in comparison with a prior tempering apparatus for delivering the same amount of 1000 kg/hour of well-tempered dark chocolate.

At another production test well-tempered milk chocolate is continuously delivered in an amount of 1000 kg/hour. Approximately 75% of the milk chocolate is by-passed in the conduit 43, so that this amount is not crystallised in the crystallisation section 40. The tempering index is in the region of 4,5 - 5,4, which is impressive.
The total energy consumption for the apparatus was measured, both in terms of cooling energy from cold water as well as the consumption of all electrical components and pumps. The result is that 55% of the total energy consumption is saved in comparison with a prior tempering apparatus for delivering the same amount of 1000 kg/hour of well-tempered milk chocolate. The total consumed energy amount was 35 KW/hour for continuously tempering 1000kg/hour milk chocolate with the traditional tempering machine. With the machine according to the invention, the total consumed energy amount was 10 KW/hour for continuously tempering the same mass and the same amount per hour.

The result of the high savings in total energy consumption for the apparatus is astonishing and a great advantage for the producer, especially for factories which has many tempering machines.

The embodiment disclosed in figure 4 is identical to the embodiment 28 disclosed in figure 3 apart from a further cooler 46 arranged in the conduit 43. Hereby is obtained a finer control with the temperature of the by-passed stream of mass before it enters into the mixing section 41. This is an advantage when the mass type dictates very accurate temperature control in the region at which no crystals are created. The crystals of the first stream of mass survive and increase further crystallisation in the mixing section 41.

## Claims

1. Method for continuous tempering of a fat-containing, crystallisable chocolate mass, which has been heated, so that it is liquid, pump able and free from crystals, and by which no additional substance such as seed materials as cocoa butter is added, and neither is already crystallised mass re-circulated, that the mass is divided into a first stream of mass and a second stream of mass, which mass is cooled, so that crystals are created in the first stream of mass, and so that the second stream of mass is still being free from crystals, where after the first stream of mass and the second stream of mass is being mixed together into one final crystallised stream of mass, **characterised in, that** the complete mass is cooled before it is divided, however still being free from crystals.

2. Method according to claim 1, **characterised in, that** the amount of the first stream of mass is between 5% and 40% of the amount of the final stream of mass.

3. Method according to claim 1, **characterised in, that** the temperature of the second stream of mass is kept 4-7°C higher than the lowest achievable temperature of the first stream of mass, when it is being crystallised.

4. Method according to claim 1, **characterised in, that** the second stream of mass is cooled, however still being essentially free from crystals.

## Patentansprüche

1. Verfahren zur kontinuierlichen Temperierung einer fetthaltigen kristallisierbaren Schokoladenmasse, die erwärmt worden ist, so dass sie flüssig, zu pumpen und frei von Kristallen ist, und bei der keine zusätzliche Substanz wie beispielsweise Keimstoffe wie Kakaobutter hinzugefügt ist und keine schon kristallisierte Masse in Umlauf gebracht ist, wobei die Masse in einen ersten Massestrom und einen zweiten Massestrom geteilt wird,
wobei die Masse gekühlt wird, so dass im ersten Massestrom Kristalle erzeugt werden und dass der zweite Massestrom noch frei von Kristallen ist, wobei danach der erste Massestrom und der zweite Massestrom zu einem einzelnen kristallisierten letztendlichen Massestrom zusammengemischt werden, **dadurch gekennzeichnet, dass** die ganze Masse, bevor sie geteilt wird, gekühlt wird, jedoch noch frei von Kristallen ist.

2. Verfahren nach Anspruch 1, **dadurch gekennzeichnet, dass** der Betrag des ersten Massestroms zwischen 5 % und 40 % des Betrags des letztendlichen Massestroms ist.

3. Verfahren nach Anspruch 1, **dadurch gekennzeichnet, dass** die Temperatur des zweiten Massestroms 4 - 7°C höher als die niedrigste erreichbare Temperatur des ersten Massestroms, wenn er kristallisiert wird, gehalten wird.

4. Verfahren nach Anspruch 1, **dadurch gekennzeichnet, dass** der zweite Massestrom gekühlt wird, jedoch noch im Wesentlichen frei von Kristallen ist.

## Revendications

1. Méthode de tempérage continu des masses de chocolat cristallisables contenant des matières grasses, qui ont été chauffées, de sorte à les rendre liquides, pompables et sans cristaux, auxquelles aucune substance additionnelle telle que des matières d'ensemencement comme le beurre de cacao n'a été ajoutée, et qui ne sont pas des masses déjà cristallisées qui sont recirculées,
que la masse est divisée en un premier flux de masse et en un deuxième flux de masse,
que cette masse soit refroidie, de sorte à ce que les cristaux se forment dans le premier flux de masse et que le deuxième flux de masse ne présente aucuns cristaux,
pour finir par mélanger le premier flux de masse au second flux de masse et obtenir au final un flux de masse cristallisé, **caractérisée en ce que** la masse complète est refroidie avant d'être divisée, tout en étant ne présente aucuns cristaux.

2. Méthode selon la revendication 1, **caractérisée en ce que** la quantité de masse du premier flux de masse se situe entre 5 % et 40 % de la quantité du flux de masse final.

3. Méthode selon la revendication 1, **caractérisée en ce que** la température du deuxième flux de masse est maintenue à 4 - 7 °C plus haut que la température la plus faible pouvant être atteinte par le premier flux de masse, au moment de la cristallisation.

4. Méthode selon la revendication 1, **caractérisée en ce que** la masse du deuxième flux est refroidie, tout en étant en grande partie libre de cristaux.
